# EUROPEAN PATENT APPLICATION

(11) **EP 4 697 533 A1**
(43) Date of publication of application: **18.02.2026**
(21) Application number: 24787767.3
(22) Date of filing: 23.01.2024
(51) Int. Cl.: H02J 1/10

(54) **DIRECT-CURRENT BUS AND DIRECT-CURRENT BUS SYSTEM**

(30) Priority: 10.04.2023 CN 202320864935 U
(71) Applicant: Vertiv Tech Co., Ltd., Guangdong 518055 (CN)
(72) Inventor: WU, Jinzhi, Shenzhen, Guangdong 518055 (CN); FANG, Yongping, Shenzhen, Guangdong 518055 (CN); SUN, Pengcheng, Shenzhen, Guangdong 518055 (CN)
(74) Representative: Ambroz, Simon
(86) International application number: PCT/CN2024/073552
(87) International publication number: WO 2024/212661

(57) **Abstract**

A direct-current bus and a direct-current bus system, which relate to the technical field of power supply control. The direct-current bus comprises: a direct-current positive electrode conductor, a neutral line conductor, and a direct-current negative electrode conductor. The direct-current positive electrode conductor and the neutral line conductor are used for supplying power to a load, and/or the neutral line conductor and the direct-current negative electrode conductor are used for supplying power to a load. By means of the above content, the problem in the related art that the transmission power of a direct-current bus is lower due to two conductors being used by the direct-current bus is solved.

## Description

This application claims priority to Chinese Patent Application No. 202320864935.9 titled "DIRECT-CURRENT BUS AND DIRECT-CURRENT BUS SYSTEM", filed on April 10, 2023 with the China National Intellectual Property Administration, which is incorporated herein by reference in its entirety.

### FIELD

The present disclosure relates to the field of power supply control, and in particular to a direct-current bus and a direct-current bus system.

### BACKGROUND

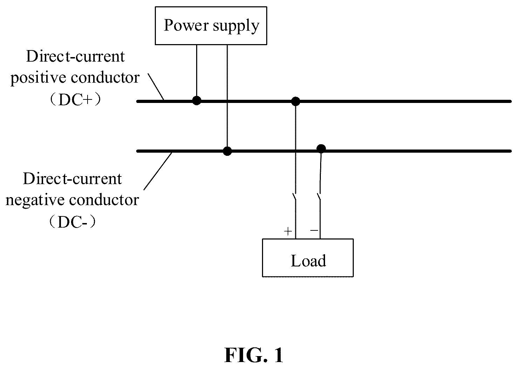

Direct-current power transmission is required in many practical scenarios. Each group of direct-current buses in a direct-current power transmission system is generally a single-phase two-wire direct-current bus, comprising a positive conductor and a negative conductor, as shown in FIG. 1. Compared with a three-phase alternating-current power transmission system, the single-phase two-wire direct-current bus has a relatively smaller power transmission capacity. Increasing the number of direct-current buses or enlarging their specification to enhance transmission power would increase costs, while increasing voltage to achieve higher transmission power not only increases costs but may also lead to incompatibility with voltages of existing direct-current equipment.

Regarding the problem of low transmission power of a direct-current bus due to the use of two conductors in the direct-current bus in the conventional technology, no effective solution has yet been proposed.

### SUMMARY

A primary object of the present disclosure is to provide a direct-current bus and a direct-current bus system, with which the problem of low transmission power of a direct-current bus due to the use of two conductors in the direct-current bus in the conventional technology is solved.

To achieve the above object, according to an aspect of the present disclosure, a direct-current bus is provided. The direct-current bus includes a direct-current positive conductor, a neutral conductor and a direct-current negative conductor, wherein the direct-current positive conductor and the neutral conductor are configured for supplying power to a load, and/or the neutral conductor and the direct-current negative conductor are configured for supplying power to a load.

Further, the direct-current positive conductor is connected to a positive terminal of a first load; the neutral conductor is connected to a negative terminal of the first load, and the neutral conductor is connected to a positive terminal of a second load; and the direct-current negative conductor is connected to a negative terminal of the second load.

Further, in a case where a first load and a second load are powered via a first power supply, a second power supply, a first direct-current bus and a second direct-current bus, the first power supply is connected to the first direct-current bus; the second power supply is connected to the second direct-current bus; a direct-current positive conductor of the first direct-current bus is connected to a first positive terminal of the first load; a neutral conductor of the first direct-current bus is connected to a first negative terminal of the first load, the neutral conductor of the first direct-current bus is connected to a first positive terminal of the second load; a direct-current negative conductor of the first direct-current bus is connected to a first negative terminal of the second load; a direct-current positive conductor of the second direct-current bus is connected to a second positive terminal of the first load; a neutral conductor of the second direct-current bus is connected to a second negative terminal of the first load, the neutral conductor of the second direct-current bus is connected to a second positive terminal of the second load; and a direct-current negative conductor of the second direct-current bus is connected to a second negative terminal of the second load.

Further, in a case where a first load and a second load are powered via a first power supply, a second power supply and a first direct-current bus, the first power supply is connected to a direct-current positive conductor of the first direct-current bus and a neutral conductor of the first direct-current bus; the second power supply is connected to the neutral conductor of the first direct-current bus and a direct-current negative conductor of the first direct-current bus; the direct-current positive conductor of the first direct-current bus is connected to a positive terminal of the first load, and the direct-current positive conductor of the first direct-current bus is connected to a first positive terminal of the second load; a neutral conductor of the first direct-current bus is connected to a first negative terminal of the first load, the neutral conductor of the first direct-current bus is connected to a second positive terminal of the first load, the neutral conductor of the first direct-current bus is connected to a first negative terminal of the second load, and the neutral conductor of the first direct-current bus is connected to a second positive terminal of the second load; and the direct-current negative conductor of the first direct-current bus is connected to a second negative terminal of the first load, and the direct-current positive conductor of the first direct-current bus is connected to a second negative terminal of the second load.

Further, in the case where the first load and the second load are powered via the first power supply, the second power supply and the first direct-current bus, the direct-current positive conductor of the first direct-current bus, the neutral conductor of the first direct-current bus and the direct-current negative conductor of the first direct-current bus are ungrounded.

Further, in the case where the first load and the second load are powered via the first power supply, the second power supply and the first direct-current bus, the direct-current positive conductor of the first direct-current bus and the direct-current negative conductor of the first direct-current bus are ungrounded, and the neutral conductor of the first direct-current bus is grounded via a high resistance.

Further, in the case where the first load and the second load are powered via the first power supply, the second power supply and the first direct-current bus, the direct-current positive conductor of the first direct-current bus and the direct-current negative conductor of the first direct-current bus are ungrounded, and the neutral conductor of the first direct-current bus is grounded.

Further, the direct-current bus comprises at least one of the following: a bus duct, a bus bridge, a busbar, a cable, and a bare wire.

Further, in a case where a first load and a second load are powered via the direct-current bus, a current-carrying capacity of the neutral conductor of the direct-current bus is less than that of the direct-current positive conductor of the direct-current bus and the direct-current negative conductor of the direct-current bus.

Further, a direct-current bus system is provided, including: a first-level direct-current bus, a plurality of second-level direct-current buses and a plurality of third-level direct-current buses, wherein, for each of the plurality of second-level direct-current buses, a direct-current positive conductor of the first-level direct-current bus is connected to a direct-current positive conductor of the second-level direct-current bus, a neutral conductor of the first-level direct-current bus is connected to a neutral conductor of the second-level direct-current bus, and a direct-current negative conductor of the first-level direct-current bus is connected to a direct-current negative conductor of the second-level direct-current bus, wherein a current-carrying capacity of the first-level direct-current bus is greater than that of the second-level direct-current bus; the direct-current positive conductor of the second-level direct-current bus is connected to direct-current positive conductors of a number of third-level direct-current buses among the plurality of third-level direct-current buses, the neutral conductor of the second-level direct-current bus is connected to neutral conductors of the number of third-level direct-current buses, and the direct-current negative conductor of the second-level direct-current bus is connected to direct-current negative conductors of the number of third-level direct-current buses, wherein the current-carrying capacity of the second-level direct-current bus is greater than that of each of the number of third-level direct-current bus; and each of the plurality of third-level direct-current buses is connected to a corresponding load to supply power to the load.

In the present disclosure, a direct-current positive conductor, a neutral conductor and a direct-current negative conductor are adopted, wherein the direct-current positive conductor and the neutral conductor are configured for supplying power to a load, and/or the neutral conductor and the direct-current negative conductor are configured for supplying power to a load. With the present disclosure, the problem of low transmission power of a direct-current bus due to the use of two conductors in the direct-current bus in the conventional technology is solved. In this solution, a two-phase three-wire direct-current bus is proposed. The direct-current bus includes a direct-current positive conductor, a neutral conductor and a direct-current negative conductor. The direct-current positive conductor and the neutral conductor form one group, and the neutral conductor and the direct-current negative conductor form another group. Both groups can be used to supply power to a load. By adding a neutral conductor between the direct-current positive conductor and the direct-current negative conductor, two power supply groups are formed. Compared with the existing technology, the load is no longer powered via one positive conductor and one negative conductor, thereby achieving an effect of improving the transmission power of the direct-current bus.

### BRIEF DESCRIPTION OF THE DRAWINGS

The accompanying drawings, which constitute a part of the present disclosure, are intended to provide a further understanding of the present disclosure. The exemplary embodiments of the present disclosure and descriptions thereof are intended to explain the present disclosure and do not constitute an improper limitation on the present disclosure. In the drawings:
FIG. 1 is a schematic diagram of a single-phase two-wire direct-current bus according to the conventional technology;
FIG. 2 is a schematic diagram of a direct-current bus according to an embodiment of the present disclosure;
FIG. 3 is a schematic diagram of a direct-current bus supplying power to a first load and a second load according to an embodiment of the present disclosure;
FIG. 4 is a first schematic diagram of an alternative manner of supplying power by a direct-current bus according to an embodiment of the present disclosure;
FIG. 5 is a second schematic diagram of an alternative manner of supplying power by a direct-current bus according to an embodiment of the present disclosure;
FIG. 6 is a schematic diagram of a direct-current bus system according to an embodiment of the present disclosure; and
FIG. 7 is a schematic diagram of an alternative manner of supplying power by a direct-current bus system according to an embodiment of the present disclosure.

### DETAILED DESCRIPTION

It should be noted that the embodiments and features of the embodiments in the present disclosure may be combined with each other, as long as no conflict is to be caused. The present disclosure is described in detail below with reference to the accompanying drawings and in conjunction with embodiments.

In order to enable those skilled in the art to understand the solutions in the present disclosure, hereinafter the technical solutions of embodiments of the present disclosure are described clearly and completely in conjunction with the drawings of the embodiments of the present disclosure. Apparently, the embodiments described below are only some embodiments, rather than all the embodiments of the present disclosure. Any other embodiments obtained by those of ordinary skills in the art based on the embodiments of the present disclosure, without any creative effort, shall fall within the protection scope of the present disclosure.

It should be noted that the terms "first", "second" and the like in the description, claims and the accompanying drawings of the present disclosure are intended to distinguish similar objects from each other, rather than to describe a specific sequence or order. It should be understood that data used in such manner may be interchanged appropriately, so that the embodiments of the present disclosure may be implemented. Moreover, the terms "include (comprise)", "have", and any other variants thereof are intended to cover a non-exclusive inclusion. For example, a process, method, system, product, or apparatus that includes a list of steps or units is not necessarily limited to the expressly listed steps or units, but may include other steps or units not expressly listed or inherent to the process, method, product, or apparatus.

It should be noted that the relevant information (including but not limited to user equipment information and user personal information) and data (including but not limited to data for display and analysis data) involved in the present disclosure are information and data authorized by the user or fully authorized by various parties. For example, an interface is set up between the system and a relevant user or organization. Before acquiring relevant information, it is necessary to send an acquisition request to the user or organization through the interface, and acquire the relevant information after receiving consent information fed back by the user or organization.

In a conventional technology, a direct-current bus is a single-phase two-wire direct-current bus, which includes a direct-current positive conductor (DV+) and a direct-current negative conductor (DV-). Since there are only two conductors, the power that can be transmitted is relatively low compared to a three-phase alternating-current power transmission system. In order to solve the problem of low transmission power in the conventional direct-current bus technology, a direct-current bus is proposed in the present disclosure.

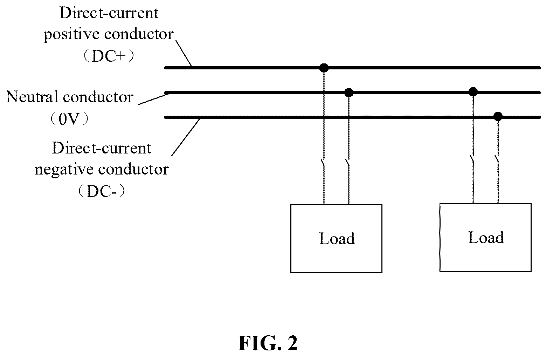

The direct-current bus provided by the present disclosure is described below. FIG. 2 is a schematic diagram of a direct-current bus according to an embodiment of the present disclosure. The direct-current bus includes a direct-current positive conductor, a neutral conductor, and a direct-current negative conductor. The direct-current positive conductor and the neutral conductor are configured for supplying power to a load, and/or the neutral conductor and the direct-current negative conductor are configured for supplying power to a load.

In an implementation, as shown in FIG. 2, the direct-current bus comprises three conductors, namely, a direct-current positive conductor, a neutral conductor, and a direct-current negative conductor. The direct-current positive conductor may be denoted as DV+, the neutral conductor may be held at 0 V, and the direct-current negative conductor may be denoted as DV-. When supplying power to a load, power may be supplied via the direct-current positive conductor and the neutral conductor, or power may be supplied via the neutral conductor and the direct-current negative conductor.

In the conventional technology, a direct-current bus consists of one direct-current positive conductor and one direct-current negative conductor. In a case where a supply voltage is U and a supply current is I, a transmission power of the direct-current bus in the conventional technology is only P = U*I. Such transmission power is lower than that of a three-phase alternating-current power transmission system. In the present disclosure, by introducing a neutral conductor between the direct-current positive conductor and the direct-current negative conductor, the present disclosure achieves a single direct-current bus including three conductors, i.e., the direct-current positive conductor, the neutral conductor, and the direct-current negative conductor. In a specific implementation, the direct-current positive conductor and the neutral conductor may be configured for supplying power to a load, or the neutral conductor and the direct-current negative conductor may be configured for supplying power to a load. In this case, the three conductors can transmit twice the current of a single-phase two-wire direct-current bus, thereby achieving an effect of improving a transmission efficiency of the direct-current bus.

It should be noted that the load may be a three-wire load, that is, the load includes a positive terminal, a zero terminal, and a negative terminal. In a case where the load is a three-wire load, the positive terminal of the load is connected to the direct-current positive conductor, the zero terminal of the load is connected to the neutral conductor, and the negative terminal of the load is connected to the direct-current negative conductor.

Alternatively, in the direct-current bus provided in an embodiment of the present disclosure, the direct-current positive conductor is connected to a positive terminal of a first load; the neutral conductor is connected to a negative terminal of the first load, and the neutral conductor is connected to a positive terminal of a second load; and the direct-current negative conductor is connected to a negative terminal of the second load.

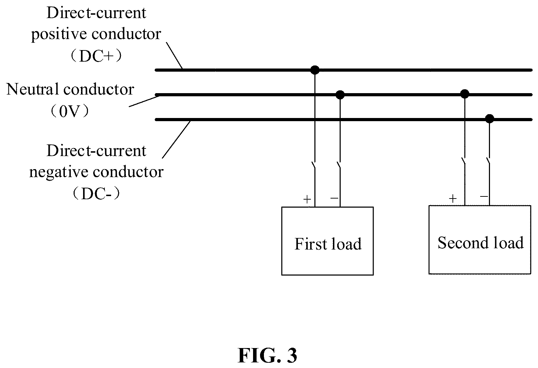

In an implementation, in a case where the direct-current bus provided in the present disclosure is applied to supply power to two loads simultaneously, the corresponding circuit connection is as shown in FIG. 3. The first load and the second load are powered via a power supply and a direct-current bus. A positive terminal of the first load is connected to the direct-current positive conductor, and a negative terminal of the first load is connected to the neutral conductor, that is, the first load is powered via the direct-current positive conductor and the neutral conductor. A positive terminal of the second load is connected to the neutral conductor, and a negative terminal of the second load is connected to the direct-current negative conductor, that is, the second load is powered via the neutral conductor and the direct-current negative conductor. By enabling the three conductors in the direct-current bus to operate simultaneously, the transmission power of the direct-current bus is improved.

With the above connection method, the neutral conductor in the direct-current bus shares the current carried by the direct-current positive conductor and the direct-current negative conductor, so that the transmission power of the direct-current bus is improved.

It should be noted that the terms "first" and "second" are used for illustration only. In actual applications, the number of the first load or the second load is not limited to one, and may be multiple.

Alternatively, in the direct-current bus provided in an embodiment of the present disclosure, in a case where a first load and a second load are powered via a first power supply, a second power supply, a first direct-current bus and a second direct-current bus, the first power supply is connected to the first direct-current bus; the second power supply is connected to the second direct-current bus; a direct-current positive conductor of the first direct-current bus is connected to a first positive terminal of the first load; a neutral conductor of the first direct-current bus is connected to a first negative terminal of the first load, the neutral conductor of the first direct-current bus is connected to a first positive terminal of the second load; a direct-current negative conductor of the first direct-current bus is connected to a first negative terminal of the second load; a direct-current positive conductor of the second direct-current bus is connected to a second positive terminal of the first load; a neutral conductor of the second direct-current bus is connected to a second negative terminal of the first load, the neutral conductor of the second direct-current bus is connected to a second positive terminal of the second load; and a direct-current negative conductor of the second direct-current bus is connected to a second negative terminal of the second load.

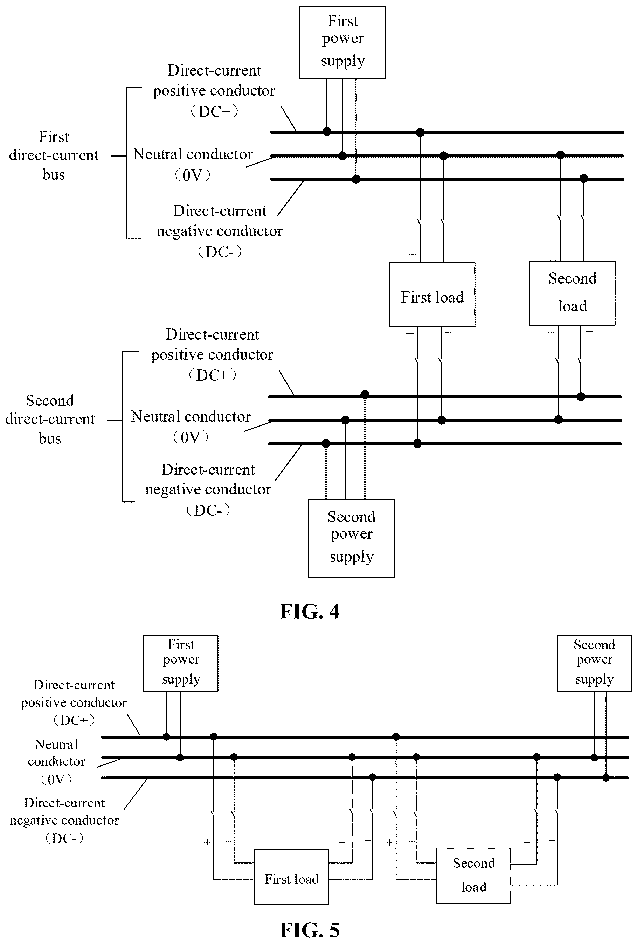

In an implementation, a 2N architecture refers to a power supply architecture consisting of two power supplies. In a case where the direct-current bus provided in the embodiment of the present disclosure is applied to the 2N architecture, the corresponding circuit connection is as shown in FIG. 4. The first power supply is configured for supplying power to the first direct-current bus, and the second power supply is configured for supplying power to the second direct-current bus. For the first direct-current bus, the direct-current positive conductor of the first direct-current bus is connected to the first positive terminal of the first load; the neutral conductor of the first direct-current bus is connected to the first negative terminal of the first load, and is connected to the first positive terminal of the second load; and the direct-current negative conductor of the first direct-current bus is connected to the first negative terminal of the second load. In simple terms, the first load is powered via the direct-current positive conductor and the neutral conductor of the first direct-current bus, and the second load is powered via the neutral conductor and the direct-current negative conductor of the first direct-current bus.

For the second direct-current bus, the direct-current positive conductor of the second direct-current bus is connected to the second positive terminal of the first load; the neutral conductor of the second direct-current bus is connected to the second negative terminal of the first load, and is connected to the second positive terminal of the second load; and the direct-current negative conductor of the second direct-current bus is connected to the second negative terminal of the second load. In simple terms, the first load is powered via the direct-current positive conductor and the neutral conductor of the second direct-current bus, and the second load is powered via the neutral conductor and the direct-current negative conductor of the second direct-current bus.

It can be seen from the above that the first direct-current bus and the second direct-current bus both supply power to the first load and the second load, and the first direct-current bus and the second direct-current bus form a 2N architecture with each other. When the first direct-current bus fails, the first load and the second load may be still powered via the second direct-current bus, ensuring normal operation of the system.

Furthermore, assuming that a voltage between the direct-current positive conductor (DC+) and the direct-current negative conductor (DC-) is U, then a voltage between the direct-current positive conductor and the 0 V bus (i.e., the neutral conductor) is U1, a voltage between 0 V and the direct-current negative conductor is U2, and there has Ul+U2=U. Therefore, when the loads connected to the DC+ and DC- buses are balanced, there has U1=U2=U/2. Then, when selecting power devices, distribution devices, or loads for the power transmission system, the operating voltage range may be considered as half of the operating voltage U of a single-phase two-wire direct-current bus. Therefore, with the direct-current bus provided in the present disclosure, not only the costs for devices and apparatus can be reduced, but also the selection range of related devices and apparatus can be expanded.

Alternatively, in the direct-current bus provided in an embodiment of the present disclosure, in a case where a first load and a second load are powered via a first power supply, a second power supply and a first direct-current bus, the first power supply is connected to a direct-current positive conductor of the first direct-current bus and a neutral conductor of the first direct-current bus; the second power supply is connected to the neutral conductor of the first direct-current bus and a direct-current negative conductor of the first direct-current bus; the direct-current positive conductor of the first direct-current bus is connected to a first positive terminal of the first load, and the direct-current positive conductor of the first direct-current bus is connected to a first positive terminal of the second load; a neutral conductor of the first direct-current bus is connected to a first negative terminal of the first load, the neutral conductor of the first direct-current bus is connected to a second positive terminal of the first load, the neutral conductor of the first direct-current bus is connected to a first negative terminal of the second load, and the neutral conductor of the first direct-current bus is connected to a second positive terminal of the second load; and the direct-current negative conductor of the first direct-current bus is connected to a second negative terminal of the first load, and the direct-current positive conductor of the first direct-current bus is connected to a second negative terminal of the second load.

Specifically, since the direct-current bus provided in the present disclosure is a two-phase three-wire bus, a 2N architecture can be directly implemented using two direct-current power supplies and one direct-current bus. The specific connection for such 2N architecture is as shown in FIG. 5. The first power supply is connected to the direct-current positive conductor of the first direct-current bus and the neutral conductor of the first direct-current bus, and the second power supply is connected to the neutral conductor of the first direct-current bus and the direct-current negative conductor of the first direct-current bus. The first load and the second load are then powered respectively via the direct-current positive conductor and the neutral conductor, and the neutral conductor and the direct-current negative conductor.

In a case where the first power supply operates normally, the first load and the second load can be powered only via the first power supply, the direct-current positive conductor of the first direct-current bus and the neutral conductor of the first direct-current bus. In a case where the first power supply has an abnormality, the first load and the second load can be powered via the second power supply, the direct-current negative conductor of the first direct-current bus and the neutral conductor of the first direct-current bus.

With the connection method mentioned above, the application of the two-phase three-wire direct-current bus proposed in the present disclosure is further expanded, and one direct-current bus can be powered by two two-phase direct-current power supplies. This power supply mode can similarly achieve the effect of improving transmission power of the direct-current bus.

Furthermore, when supplying power through the direct-current bus provided in an embodiment of the present disclosure, grounding of the direct-current positive conductor, the neutral conductor, and the direct-current negative conductor can be achieved in the following three manners.

In a first manner, the direct-current positive conductor of the first direct-current bus, the neutral conductor of the first direct-current bus, and the direct-current negative conductor of the first direct-current bus are all ungrounded.

In a second manner, the direct-current positive conductor of the first direct-current bus and the direct-current negative conductor of the first direct-current bus are ungrounded, while the neutral conductor of the first direct-current bus is grounded via a high resistance.

In a third manner, the direct-current positive conductor of the first direct-current bus and the direct-current negative conductor of the first direct-current bus are ungrounded, while the neutral conductor of the first direct-current bus is directly grounded.

In summary, there are three grounding methods for the aforementioned conductors: the direct-current positive conductor, the neutral conductor and the direct-current negative conductor are all ungrounded, achieving floating power supply; the direct-current positive conductor and the direct-current negative conductor are ungrounded, while the neutral conductor is grounded via a high resistance; and the direct-current positive conductor and the direct-current negative conductor are ungrounded, while the neutral conductor is grounded via a conductor. The three different grounding methods meet diverse application requirements of the direct-current bus, which enriches application scenarios of the direct-current bus, and broadens the scope of applications of the two-phase three-wire direct-current bus.

Alternatively, in the direct-current bus provided in an embodiment of the present disclosure, the direct-current bus comprises at least one of the following: a bus duct, a bus bridge, a busbar, a cable, and a bare wire.

In an implementation, the direct-current bus proposed in the present disclosure may be composed of a bus duct, a bus bridge, a busbar, a cable and a bare wire. By supporting a variety of implementations of the conductors, the direct-current bus provided in the present disclosure demonstrates high flexibility and strong applicability.

Alternatively, in the direct-current bus provided in an embodiment of the present disclosure, when supplying power to a first load and a second load through the direct-current bus, a current-carrying capacity of the neutral conductor of the direct-current bus is less than that of the direct-current positive conductor of the direct-current bus and the direct-current negative conductor of the direct-current bus.

In an implementation, when supplying power to both of the first load and the second load via the direct-current bus provided in the present disclosure, if the first load and the second load both operate normally, the currents from the first load and the second load flow in opposite directions through the neutral conductor, allowing them to cancle each other out. In this case, the neutral conductor only needs to carry the unbalanced current difference between the direct-current positive conductor and the direct-current negative conductor. Therefore, the current-carrying capacity of the neutral conductor can be less than that of the direct-current positive conductor and the direct-current negative conductor. Thereby, a wire with a relatively smaller current-carrying capacity can be selected as the neutral conductor, achieving the technical effect of cost reduction.

It should be noted that in an extreme circumstance where only one load works, the current-carrying capacity of the neutral conductor would be equivalent to that of the direct-current positive conductor and the direct-current negative conductor. In this case, it is necessary to maintain the same specifications for the neutral conductor as those of the direct-current positive conductor and the direct-current negative conductor, that is, the neutral conductor must have the same current-carrying capacity as the direct-current positive conductor and the direct-current negative conductor.

It should be noted that, when supplying power to a load via the direct-current bus provided in the present disclosure, it is necessary to detect the voltage to ground of the direct-current positive conductor of the direct-current bus, the neutral conductor of the direct-current bus, and the direct-current negative conductor of the direct-current bus, respectively, to determine whether any abnormalities exist in the direct-current positive conductor of the direct-current bus, the neutral conductor of the direct-current bus, or the direct-current negative conductor of the direct-current bus. By detecting the voltages of the direct-current positive conductor, the neutral conductor and the direct-current negative conductor, the safety of the direct-current bus in supplying power to the load is improved.

In the direct-current bus provided in the present disclosure, a direct-current positive conductor, a neutral conductor and a direct-current negative conductor are disposed, wherein the direct-current positive conductor and the neutral conductor are configured for supplying power to a load, and/or the neutral conductor and the direct-current negative conductor are configured for supplying power to a load. With the present disclosure, the problem of low transmission power of a direct-current bus due to the use of two conductors in the direct-current bus in the conventional technology is solved. In this solution, a two-phase three-wire direct-current bus is proposed. The direct-current bus includes a direct-current positive conductor, a neutral conductor and a direct-current negative conductor. The direct-current positive conductor and the neutral conductor form one group, and the neutral conductor and the direct-current negative conductor form another group. Both groups can be applied to supply power to a load. By introducing the neutral conductor between the direct-current positive conductor and the direct-current negative conductor, two power supply groups are formed. Compared with the existing technology, the load is no longer powered via one positive conductor and one negative conductor, thereby achieving an effect of improving the transmission power of the direct-current bus.

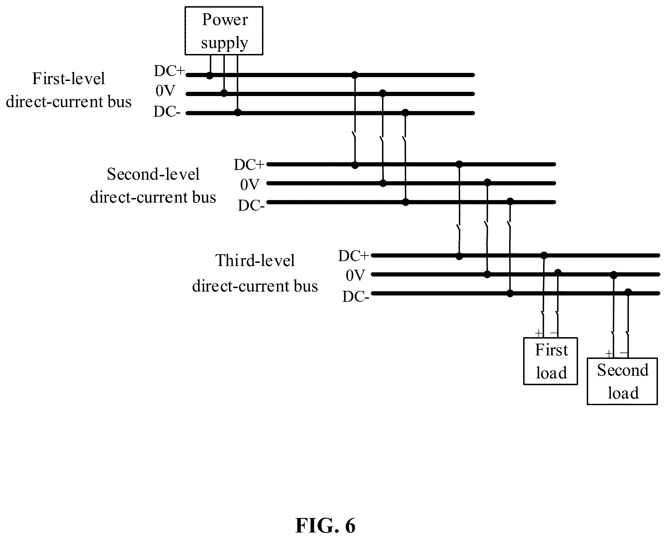

A direct-current bus system is further provided in an embodiment of the present disclosure. The direct-current bus system includes multiple levels of two-phase three-wire direct-current buses. The direct-current bus system provided in the embodiment of the present disclosure is described below. FIG. 6 is a schematic diagram of an architecture of a direct-current bus system according to an embodiment of the present disclosure. The direct-current bus system includes a first-level direct-current bus, a plurality of second-level direct-current buses and a plurality of third-level direct-current buses. For each of the plurality of second-level direct-current buses, a direct-current positive conductor of the first-level direct-current bus is connected to a direct-current positive conductor of the second-level direct-current bus, a neutral conductor of the first-level direct-current bus is connected to a neutral conductor of the second-level direct-current bus, and a direct-current negative conductor of the first-level direct-current bus is connected to a direct-current negative conductor of the second-level direct-current bus, wherein a current-carrying capacity of the first-level direct-current bus is greater than that of the second-level direct-current bus. For each of the second-level direct-current buses, a direct-current positive conductor of the second-level direct-current bus is connected to direct-current positive conductors of a number of third-level direct-current buses among the plurality of third-level direct-current buses, a neutral conductor of the second-level direct-current bus is connected to neutral conductors of the number of third-level direct-current buses, and a direct-current negative conductor of the second-level direct-current bus is connected to direct-current negative conductors of the number of third-level direct-current buses, wherein the current-carrying capacity of the second-level direct-current bus is greater than that of each of the number of third-level direct-current buses. Each of the plurality of third-level direct-current buses is connected to a load to supply power to the load.

Specifically, in an actual application, supplying power to loads is not achieved by using a single direct-current bus alone. Instead, it requires multi levels of direct-current to distribute the current provided by the power supply step by step, ultimately supplying power to loads within a certain spatial range. For example, power is often supplied to loads through multiple cabinets, that is, a single cabinet houses multiple loads, a single room accommodates multiple cabinets, and there are multiple rooms. In this case, three levels of direct-current buses are required to supply power, namely, a first-level direct-current bus, a second-level direct-current bus, and a third-level direct-current bus. The first-level direct-current bus is configured for distributing power to multiple rooms. Then, the second-level direct-current buses in each room further distribute current to individual cabinets. Finally, the third-level direct-current buses in each cabinet supply power to loads within the cabinet.

The corresponding circuit connection of three levels of direct-current buses is as shown in FIG. 6. A direct-current positive conductor, a neutral conductor and a direct-current negative conductor of a first-level direct-current bus are respectively connected to a direct-current positive conductor, a neutral conductor and a direct-current negative conductor of each second-level direct-current bus. The direct-current positive conductor, the neutral conductor and the direct-current negative conductor of a second-level direct-current bus are respectively connected to a direct-current positive conductor, a neutral conductor and a direct-current negative conductor of each third-level direct-current bus. Accordingly, a multi-level current transmission can be achieved by the above connection method.

It should be noted that the above-mentioned three levels of direct-current buses can also be expanded to four levels of direct-current buses, five levels of direct-current buses, or the like, which can be adjusted accordingly based on an actual need in an actual application. There is no restriction on the number of levels of direct-current buses in the direct-current bus system provided in the present disclosure.

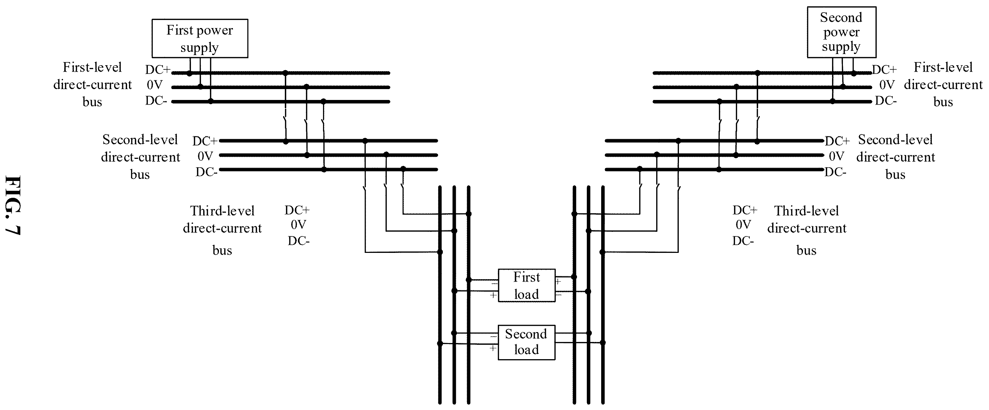

In an alternative embodiment, the above-mentioned direct-current bus system may have a 2N architecture, as shown in FIG. 7. Power is supplied to two groups of three-level direct-current buses via a first power supply and a second power supply. A current is distributed from a first-level direct-current bus to a second-level direct-current bus, and then from the second-level direct-current bus to a third-level direct-current bus, and finally the third-level direct-current bus supplies power to loads. By configuring the direct-current bus system with the 2N architecture, it is ensured that even if the first power supply and the three-level direct-current bus corresponding to the first power supply fail, the second power supply and the three-level direct-current bus corresponding to the second power supply can continue supply power to the loads, thereby providing stability of power transmission of the system.

In the present disclosure, the direct-current bus system includes a first-level direct-current bus, a plurality of second-level direct-current buses and a plurality of third-level direct-current buses. For each of the plurality of second-level direct-current buses, a direct-current positive conductor of the first-level direct-current bus is connected to a direct-current positive conductor of the second-level direct-current bus, a neutral conductor of the first-level direct-current bus is connected to a neutral conductor of the second-level direct-current bus, and a direct-current negative conductor of the first-level direct-current bus is connected to a direct-current negative conductor of the second-level direct-current bus, wherein a current-carrying capacity of the first-level direct-current bus is greater than that of the second-level direct-current bus. For each of the plurality of the second-level direct-current buses, a direct-current positive conductor of the second-level direct-current bus is connected to direct-current positive conductors of a number of third-level direct-current buses among the plurality of the third-level direct-current buses, a neutral conductor of the second-level direct-current bus is connected to neutral conductors of the number of third-level direct-current buses, and a direct-current negative conductor of the second-level direct-current bus is connected to direct-current negative conductors of the number of third-level direct-current buses, wherein a current-carrying capacity of the second-level direct-current bus is greater than that of each of the number of third-level direct-current buses. Each of the plurality of third-level direct-current buses is connected to a corresponding load to supply power to the load. With the direct-current bus system, the problem of low transmission power of a direct-current bus due to the use of two conductors in the direct-current bus in the conventional technology is solved. In the technical solution of the present disclosure, a two-phase three-wire direct-current bus is proposed. The direct-current bus includes a direct-current positive conductor, a neutral conductor and a direct-current negative conductor. The direct-current positive conductor and the neutral conductor form one group, and the neutral conductor and the direct-current negative conductor form another group. Both groups can be applied to supply power to a load. By introducing the neutral conductor between the direct-current positive conductor and the direct-current negative conductor, two power supply groups are formed. Compared with the existing technology, the load is no longer powered by one positive conductor and one negative conductor, thereby achieving an effect of improving the transmission power of the direct-current bus.

It should be noted that terms "include", "comprise" or any other variants are intended to be non-exclusive. Therefore, a process, method, commodity or device including a series of elements includes not only the elements but also other elements that are not enumerated, or further includes elements inherent to the process, method, commodity or device. Unless expressively limited otherwise, the elements specified by the phrase "comprising (including) one..." do not exclude existence of other similar elements within the process, method, commodity or device that includes such elements.

The above are merely embodiments of the present disclosure and are not intended to limit the present disclosure. For those skilled in the art, various modifications and variations may be made to the present disclosure. Any modification, equivalent substitution and improvement made within the spirit and principle of the present disclosure should be included in the scope of the claims of the present disclosure.

Those skilled in the art should appreciate that embodiments of the present disclosure may be provided as a method, a system, or a computer program product. Thus, the present disclosure may be implemented by an entirely hardware embodiment, an entirely software embodiment, or an embodiment combining software and hardware. Furthermore, the present disclosure may be implemented as a computer program product embodied on one or more computer-usable storage media (including, but not limited to, a magnetic disk storage, a CD-ROM, or an optical storage, etc.) embodying computer-usable program codes therein.

The present disclosure is described with reference to flowcharts and/or block diagrams of the method, the device (system), and the computer program product according to the embodiments of the present disclosure. It should be understood that each process and/or block in the flowcharts and/or block diagrams, and combinations of processes and/or blocks in the flowcharts and/or block diagrams, may be implemented by computer program instructions. The computer program instructions may be provided to a processor of a general-purpose computer, a dedicated computer, an embedded processor, or other programmable data processing device to produce a machine, such that the instructions executed by the processor of the computer or other programmable data processing device produce a device for implementing functions specified in one or more processes of the flowcharts and/or one or more blocks of the block diagrams.

The computer program instructions may be stored in a computer readable memory which is capable of guiding the computer or other programmable data processing device to operate in a certain manner, such that the instructions stored in the computer readable memory generate a product including an instruction apparatus which implements the functions specified in one or more processes of the flowcharts and/or one or more blocks of the block diagrams.

These computer program instructions may be loaded onto a computer or other programmable data processing device, causing a series of operating steps to be performed on the computer or other programmable device to execute computer-implemented processing, so that the instructions executed on the computer or other programmable device provide steps for implementing the functions specified in one or more processes of the flowcharts and/or one or more blocks of the block diagrams.

In a typical configuration, a computing device includes one or more processors (CPUs), an input/output interface, a network interface, and a memory.

The memory may be in the form of non-persistent memory, random access memory (RAM) and/or non-volatile memory, such as a read-only memory (ROM) or flash RAM, in a computer-readable medium. The memory is an example of the computer-readable medium.

The computer-readable medium includes permanent and non-permanent, removable and non-removable media, which can store information by any method or technology. The information may be computer-readable instructions, data structures, program modules or other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read only memory (CD-ROM), digital versatile disc (DVD) or other optical storage, magnetic cassettes, tape disk storage or other magnetic storage devices or any other non-transmission media that may be used to store information accessible by a computing device. As defined herein, the computer-readable medium does not include transitory media, such as modulated data signals and carrier waves.

It should be further noted that terms "include", "comprise" or any other variants are intended to be non-exclusive. Therefore, a process, method, commodity or device including a series of elements includes not only the elements but also other elements that are not enumerated, or further includes elements inherent to the process, method, commodity or device. Unless expressively limited otherwise, the elements specified by the phrase "comprising (including) one..." do not exclude existence of other similar elements within the process, method, commodity or device that includes such elements.

The above are merely embodiments of the present disclosure and are not intended to limit the present disclosure. For those skilled in the art, various modifications and variations may be made to the present disclosure. Any modification, equivalent substitution and improvement made within the spirit and principle of the present disclosure should be included in the scope of the claims of the present disclosure.

## Claims

1. A direct-current bus, comprising:
a direct-current positive conductor, a neutral conductor and a direct-current negative conductor,
wherein the direct-current positive conductor and the neutral conductor are configured for supplying power to a load, and/or the neutral conductor and the direct-current negative conductor are configured for supplying power to a load.

2. The direct-current bus according to claim 1, wherein the direct-current positive conductor is connected to a positive terminal of a first load; the neutral conductor is connected to a negative terminal of the first load, and the neutral conductor is connected to a positive terminal of a second load; and the direct-current negative conductor is connected to a negative terminal of the second load.

3. The direct-current bus according to claim 1, wherein
in a case where a first load and a second load are powered via a first power supply, a second power supply, a first direct-current bus and a second direct-current bus,
the first power supply is connected to the first direct-current bus; the second power supply is connected to the second direct-current bus;
a direct-current positive conductor of the first direct-current bus is connected to a first positive terminal of the first load; a neutral conductor of the first direct-current bus is connected to a first negative terminal of the first load, the neutral conductor of the first direct-current bus is connected to a first positive terminal of the second load, and a direct-current negative conductor of the first direct-current bus is connected to a first negative terminal of the second load; and
a direct-current positive conductor of the second direct-current bus is connected to a second positive terminal of the first load; a neutral conductor of the second direct-current bus is connected to a second negative terminal of the first load, the neutral conductor of the second direct-current bus is connected to a second positive terminal of the second load, and a direct-current negative conductor of the second direct-current bus is connected to a second negative terminal of the second load.

4. The direct-current bus according to claim 1, wherein
in a case where a first load and a second load are powered via a first power supply, a second power supply and a first direct-current bus,
the first power supply is connected to a direct-current positive conductor of the first direct-current bus and a neutral conductor of the first direct-current bus; the second power supply is connected to the neutral conductor of the first direct-current bus and a direct-current negative conductor of the first direct-current bus;
the direct-current positive conductor of the first direct-current bus is connected to a first positive terminal of the first load, and the direct-current positive conductor of the first direct-current bus is connected to a first positive terminal of the second load;
the neutral conductor of the first direct-current bus is connected to a first negative terminal of the first load, the neutral conductor of the first direct-current bus is connected to a second positive terminal of the first load, the neutral conductor of the first direct-current bus is connected to a first negative terminal of the second load, and the neutral conductor of the first direct-current bus is connected to a second positive terminal of the second load; and
the direct-current negative conductor of the first direct-current bus is connected to a second negative terminal of the first load, and the direct-current positive conductor of the first direct-current bus is connected to a second negative terminal of the second load.

5. The direct-current bus according to claim 4, wherein in the case where the first load and the second load are powered via the first power supply, the second power supply and the first direct-current bus, the direct-current positive conductor of the first direct-current bus, the neutral conductor of the first direct-current bus and the direct-current negative conductor of the first direct-current bus are ungrounded.

6. The direct-current bus according to claim 4, wherein in the case where the first load and the second load are powered via the first power supply, the second power supply and the first direct-current bus, the direct-current positive conductor of the first direct-current bus and the direct-current negative conductor of the first direct-current bus are ungrounded, and the neutral conductor of the first direct-current bus is grounded via a high resistance.

7. The direct-current bus according to claim 4, wherein in the case where the first load and the second load are powered via the first power supply, the second power supply and the first direct-current bus, the direct-current positive conductor of the first direct-current bus and the direct-current negative conductor of the first direct-current bus are ungrounded, and the neutral conductor of the first direct-current bus is grounded.

8. The direct-current bus according to claim 1, wherein the direct-current bus comprises at least one of the following: a bus duct, a bus bridge, a busbar, a cable, and a bare wire.

9. The direct-current bus according to any one of claims 1 to 8, wherein in a case where a first load and a second load are powered via the direct-current bus, a current-carrying capacity of the neutral conductor of the direct-current bus is less than that of the direct-current positive conductor of the direct-current bus and the direct-current negative conductor of the direct-current bus.

10. A direct-current bus system, wherein a direct-current bus in the direct-current bus system is the direct-current bus according to claim 1, the direct-current bus system comprises a first-level direct-current bus, a plurality of second-level direct-current buses and a plurality of third-level direct-current buses, wherein,
for each of the plurality of second-level direct-current buses, a direct-current positive conductor of the first-level direct-current bus is connected to a direct-current positive conductor of the second-level direct-current bus, a neutral conductor of the first-level direct-current bus is connected to a neutral conductor of the second-level direct-current bus, and a direct-current negative conductor of the first-level direct-current bus is connected to a direct-current negative conductor of the second-level direct-current bus, wherein a current-carrying capacity of the first-level direct-current bus is greater than that of the second-level direct-current bus;
the direct-current positive conductor of the second-level direct-current bus is connected to direct-current positive conductors of a number of third-level direct-current buses among the plurality of third-level direct-current buses, the neutral conductor of the second-level direct-current bus is connected to neutral conductors of the number of third-level direct-current buses, and the direct-current negative conductor of the second-level direct-current bus is connected to direct-current negative conductors of the number of third-level direct-current buses, wherein the current-carrying capacity of the second-level direct-current bus is greater than that of each of the number of third-level direct-current buses; and
each of the plurality of third-level direct-current buses is connected to a corresponding load to supply power to the load.
